(19) Europäisches Patentamt / European Patent Office / Office européen des brevets

(11) **EP 1 877 354 B1**

(12) **EUROPÄISCHE PATENTSCHRIFT**

(45) Veröffentlichungstag und Bekanntmachung des Hinweises auf die Patenterteilung:
**30.07.2008 Patentblatt 2008/31**

(21) Anmeldenummer: 06707538.2

(22) Anmeldetag: **14.03.2006**

(51) Int Cl.:
*C04B 35/83* (2006.01)   *H05H 1/12* (2006.01)

(86) Internationale Anmeldenummer:
**PCT/EP2006/002289**

(87) Internationale Veröffentlichungsnummer:
**WO 2006/114161 (02.11.2006 Gazette 2006/44)**

(54) **VERBESSERTER PLATTENFÖRMIGER CARBONFASER-VERBUNDWERKSTOFF**

IMPROVED PLATE-SHAPED CARBON FIBRE COMPOSITE MATERIAL

MATERIAU COMPOSITE AMELIORE A BASE DE FIBRES DE CARBONE ET EN FORME DE PLAQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.04.2005 DE 102005019730**

(43) Veröffentlichungstag der Anmeldung:
**16.01.2008 Patentblatt 2008/03**

(73) Patentinhaber: **Forschungszentrum Karlsruhe GmbH**
**76133 Karlsruhe (DE)**

(72) Erfinder: **PESCHANY, Sergey**
**76149 Karlsruhe (DE)**

(56) Entgegenhaltungen:
**EP-A- 0 339 606          WO-A-02/08150**

- **PESTCHANYI S ET AL: "Estimation of carbon fibre composites as ITER divertor armour" JOURNAL OF NUCLEAR MATERIALS, AMSTERDAM, NL, Bd. 329-333, 1. August 2004 (2004-08-01), Seiten 697-701, XP004524794 ISSN: 0022-3115**
- **BOLT H ET AL: "Materials for the plasma-facing components of fusion reactors" JOURNAL OF NUCLEAR MATERIALS, AMSTERDAM, NL, Bd. 329-333, 1. August 2004 (2004-08-01), Seiten 66-73, XP004524672 ISSN: 0022-3115**
- **PATENT ABSTRACTS OF JAPAN Bd. 1995, Nr. 10, 30. November 1995 (1995-11-30) & JP 07 187833 A (MITSUBISHI CHEM CORP), 25. Juli 1995 (1995-07-25)**
- **PATENT ABSTRACTS OF JAPAN Bd. 014, Nr. 267 (P-1058), 8. Juni 1990 (1990-06-08) & JP 02 074894 A (MITSUBISHI ATOM POWER IND INC; others: 02), 14. März 1990 (1990-03-14)**

**Beschreibung**

Die Erfindung betrifft einen verbesserten plattenförmigen Carbonfaser-Verbundwerkstoff, CFC (carbon fibre composite).

Solche plattenförmigen CF-Verbundwerkstoffe dienen dem Schutz von Einrichtungen, die bei direkter Aussetzung eines Teilchenstroms durch Hitzeeinwirkung beschädigt oder zerstört werden würden. Zum Schutz dagegen werden oder sind solche empfindlichen Einrichtungen zumindest an der dem Teilchenstrom ausgesetzten Fläche mit solchen CFC-Platten verkleidet. Beispiele sind in die Atmosphäre eintretende Körper wie Raketenflugzeuge oder Raumsegler oder Flugzeuge, die sich mit sehr hoher Geschwindigkeit in dünnen Atmosphären bewegen und in dichtere zurückkehren. Aber auch Flügeleinrichtungen, die sich in einer Atmosphäre mit hoher Drehgeschwindigkeit drehen, kommen in Betracht, insbesondere die äußeren Bereiche solcher Flügel. Allgemein können vor Hitzeinwirkung zu schützende Körper einbezogen werden, die einem treffenden Teilchenstrom ausgesetzt sind, der durch sein Auftreffen einen hoch belastenden Wärmestrom bewirkt.

Ein weiterer Anwendungsbereich sind Fusionsmaschinen vom Tokamak- oder Stellarator-Typ. In ihnen sind so genannte Divertoren aufgestellt, die einem Teilchenstrom aus dem magnetisch toroidal eingeschlossen thermonuklearen Plasma ausgesetzt sind. Die unmittelbare Exposition dieser Divertoren würde aufgrund des durch diesen auftreffenden Teilchenstrom erzeugten Wärmeflusses in ihnen eine hohe Wärmebelastung hervorrufen, die keinen wirtschaftlichen Betrieb zulassen würde. Die Divertoren, wie z. B. bei JET und ASDEX-Upgrade, sind deshalb auf der zu diesem Teilchenstrom exponierten Fläche mit einer solchen etwa 2 cm starken Armierung, Platten der Größe von etwa 10 x 10 cm$^2$, bedeckt und mechanisch verstärkt. Der Wärmefluss aus diesem Plasma trifft auf diese Wand/Armierung und erwärmt sie. Der beherrschbare, stationäre Wärmefluss von 10 - 20 MW/m$^2$ wird in diesen Einrichtungen allerdings durch kurze Ausbrüche von etwa 10 GW/m$^2$, also 1000mal höher, überdeckt, die die ohnehin hohe Wärmebelastung, wenn auch sehr kurzzeitige nochmals erheblich steigert.

Carbon-Faser-Verbünde, CFC, vom Grade NB31 und NS31 wurden für die Divertor-Verstärkung des geplanten Tokamak ITER entwickelt. Sie haben eine hohe Wärmeleitfähigkeit und eine niedrige Erosionsrate, sie sind für den stationären Tokamakbetrieb bei charakteristischen Temperaturen von 1 000 - 1 500 K[1] geeignet. Experimente an Elektronenstrahleinrichtungen und numerische Untersuchungen der Erosion der CFC-Verbunde unter extremem Wärmefluss und nichtnormalen ITER-Ereignissen, wie eckenlokalisierte Moden, ELM (= edge localized mode) und vertikale Auslenkungsereignisse, VDE (= vertical deflection event) demonstrierten jedoch die hohen Erosionsraten von NB31 durch Sprödigkeitsbruch im Temperaturbereich von 3 000 - 3 500 K [2].

Numerische Simulationen für NB31 mit dem Pegasus-3D-Code haben offenbart, dass die hohe Erosionsrate bei NB31 durch einen von der lokalen Übererwärmung herrührenden Erosionsmechanismus zustande kommt [3]. Der lokale Überhitzungs- Erosionsmechanismus, LOEM (= local overheating erosion mechanism), tritt aufgrund der komplexen Struktur des CFC auf. Der CFC besteht aus einer Carbonmatrix aus und der Verstärkung durch Carbonfasern. Die Hauptkomponente der Verstärkung, die Carbon- bzw. Pechfaser, hat eine hohe Wärmeleitfähigkeit und steht bei einer solchen, hier besprochenen Armierung stets senkrecht zu der dem Wärmefluss exponierten Oberfläche. Ein solcher Faserverbund ist mit Polyacrylnitril-Fasern, PAN, gewoben und genäht, die parallel zur erwärmten Oberfläche verlaufen.

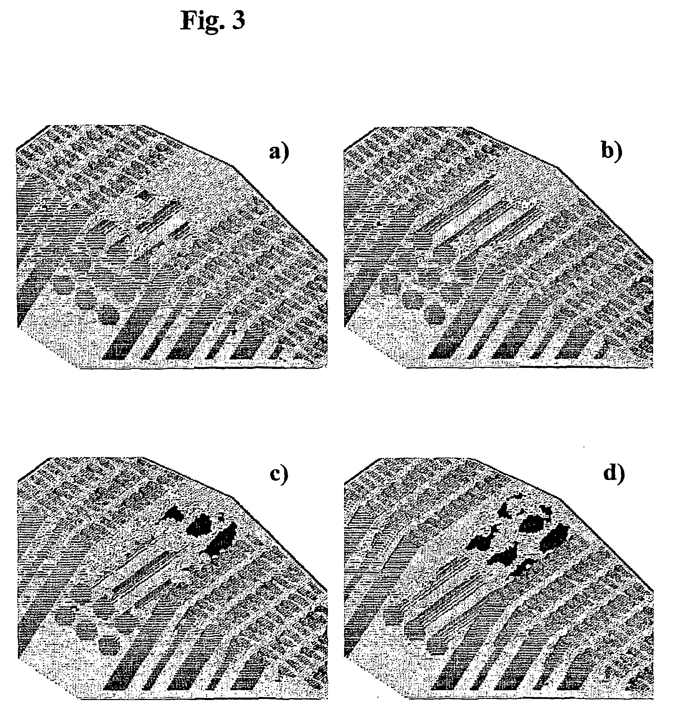

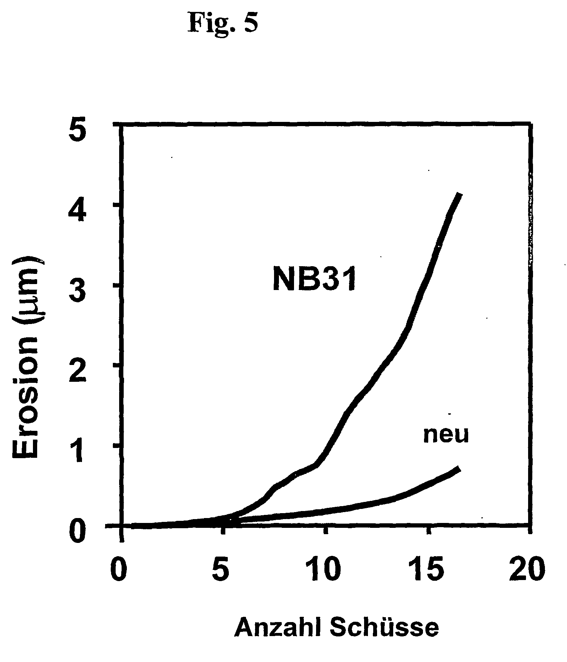

Der große Unterschied der Faser- und Matrixkoeffizienten in der Wärmeausdehnung ist maßgeblich für den LOEM. Eine Verstärkung der Erosion im LOEM tritt entsprechend dem bevorzugten Brechen an den Kontaktstellen zwischen den Fasern und der Matrix auf, gefolgt von einer Wärmeisolation der PAN-Fasern durch die oder wegen der Matrix. Experimente und numerische Simulation ergeben beide Male dasselbe Erosionsmuster für den NB31-CFC. Die Erosion beginnt im Gebiet mit PAN-Fasern, die parallel zur Oberfläche liegen. Die Erosionsrate der PAN-Fasern ist immer viel höher als die der gut wärmeleitenden Pech- / Carbonfasern, die senkrecht zu der Oberfläche verlaufen. Die "Täler" entlang den PAN-Fasern unterminieren von Seiten der Pechfasergebiete, indem sie zusätzliche Erosion herbeiführen, siehe Figuren 3 und 5, und die Funktionsdauer wie in einem positiven Rückkopplungsprozess stark und zunehmend bis zur Katastrophe reduzieren.

Der Erfindung liegt die Aufgabe zugrunde, eine verbesserte CFC-Struktur für die Armierung eines Divertors in einer Fusionseinrichtung für den toroidalen magnetischen Einschluss des thermonuklearen Plasmas bereitzustellen, die neben einem stationär einwirkenden Nennwärmefluss auch wiederholte kurzfristigen, Wärmeströme, die den stationären Wärmefluss impulsartig für kurze Zeit um ein Vielfaches übersteigen und zur starken lokalen Überhitzungen führen, standhält und bei der sich dadurch die Erosion nicht oder zumindest nur noch tolerabel auswirkt.

Die Aufgabe wird durch die im einzigen Anspruch beschriebene Maßnahme für die Anordnung der Web- und Nähfäden gelöst. Aus den Ergebnissen der Simulationen wurde die Lösung ermittelt, dass für eine signifikante Verbesserung der CFC-Erosionsstärke die Struktur des CFC so wenig wie möglich Fasern parallel zu der Verstärkungsoberfläche haben dürfen, das betrifft insbesondere die Web- und Nähfasern. Die PAN-Fasern, die die Verstärkung der mechanischen Festigkeit bringen, dürfen nicht von der CFC-Struktur entfernt werden. Sie müssen senkrecht zueinander sein, um die mechanische Stärke in der Ebene der als Verstärkung wirkenden Oberfläche zu begründen. Unter dieser Berücksichtigung wird im Anspruch 1 gekennzeichnet, die Web- und Nähfasern für eine maßgebliche Reduktion der Erosionsrate mit einem geeigneten Winkel zur Oberfläche zu neigen, und zwar verlaufen die Web- und Nähfasern nicht parallel zu dieser von dem Teilchenstrom getroffenen und dadurch erwärmten Oberfläche sondern unter einem Winkel im Bereich von

$$0° < \alpha < 90°,$$

vorzugsweise im Bereich

$$30° < \alpha < 60°.$$

Der Neigungswinkel ist vorzugsweise zwischen 30 - 60°, abhängig von den verlangten Verhältnissen zwischen Erosionsstärke und mechanischer Steifigkeit ist hier Raum für die Optimierung in einer spezifischen Umgebung bzw. einem spezifischen Anwendungsfall gegeben.

Die Verbesserung betrifft nur die Näh- und Webfasern und behält dieselbe Anordnung der Pechfasern bei, die die Wärmeleitfähigkeit von NB31 ausmacht. Wenn die Näh- und Webfasern der verbesserten Struktur unter 45° zu der Wärmeoberfläche geneigt sind, sind sie senkrecht zueinander, so dass das Material die Steifigkeit der Verstärkung vergleichbar der von NB31 erreicht. Die numerische Simulation der Erosion für CFC mit der verbesserten Struktur hat bestätigt, dass die Erosionsrate 4 - 5mal niedriger ist im Vergleich mit der von NB31.

Die Analyse des Erosionsmechanismus führt zu dem Vorschlag einer neuen CFC-Faserstruktur, die eine deutliche Reduktion der Erosionsrate aufweist. Die Verbesserung betrifft nur die Näh- und Webfasern. Die senkrechte Anordnung der Pechfasern zur angeströmten, den Wärmefluss erzeugenden Fläche bleibt unverändert wie bei dem bekannten CFC vom Typ NB31. Die Näh- und Webfaser der verbesserten Struktur sind senkrecht zueinander, so dass sie die Steifigkeit der Armierung, vergleichbar der von NB31, erreichen.

Die Erfindung wird im Folgenden anhand der Figuren 1 bis 6 näher beschrieben. Es zeigen:

Figur 1    die Faserstruktur von CFC-NB31 und die in Bezug auf niedrigere Erosion vorgeschlagene, verbesserte Struktur:

Figur 1a    die NB31-Struktur mit den wärmeleitenden Pechfasern und den Web- und Näh-PAN-Fasern ohne Carbon-Matrix;

Figur 1b    die gleiche Probe mit Carbon-Matrix mit weggeschnittener Vorderseite zum Hervorheben der Faserstruktur;

Figur 1c    die verbesserte Faserstruktur mit gleicher Lage der Pechfasern und um 45° geneigten Web- und Nähfasern;

Figur 1d    die Ansicht der Näh- und Pechfasern,

Figur 2    numerische Simulation zweier CFC-Proben, die von der im Bild oberen Kante erhitzt werden;

Figur 2a    die NB31-Struktur;

Figur 2b    die verbesserte CFC-Struktur;

Figur 3    die zeitliche Erosionsentwicklung der NB31-Oberfläche;

Figur 3a    der Beginn an der ersten Schicht,

Figur 3b    die Öffnung der ersten Schicht,

Figur 3c    die Öffnung der zweiten Schicht,

Figur 3d    die Erosin der dritten Schicht,

Figur 4    die zeitliche Erosionsentwicklung der Oberfläche an verbessertem CFC;

Figur 4a    die noch nahezu unversehrte Einstrahlfläche,

Figur 4b    die zu erodieren beginnende Einstrahlfläche,

Figur 4c    der wenig fortgeschrittene Erosionsprizess,

Figur 4d    die noch vollständig vorhandene Gewebestruktur,

Figur 5    den Vergleich der Erosionsrate bei NB31 und CFC mit verbesserter Faserstruktur;

Figur 6a    die Faserstruktur von NB31 ohne Carbon-Matrix;

Figur 6b    die Faserstruktur des verbesserten CFC ohne Carbon-Matrix;

Der Gegenstand ist hier beispielsweise die Armierung von Divertoren in den oben erwähnten Fusionsanlagen. Untersuchungen und Dimensionierungen an Hitzeschilden/Armierungen, die stark von den Gasteilchen angeströmt werden und damit auf der getroffenen Fläche entsprechende Wärmeströme ins Innere auslösen würden, können gleich, zumindest nahezu gleich behandelt werden. Die hier vorgestellte Aufgabenlösung kommt also auch in vollem Umfang für solche Bereiche in Betracht.

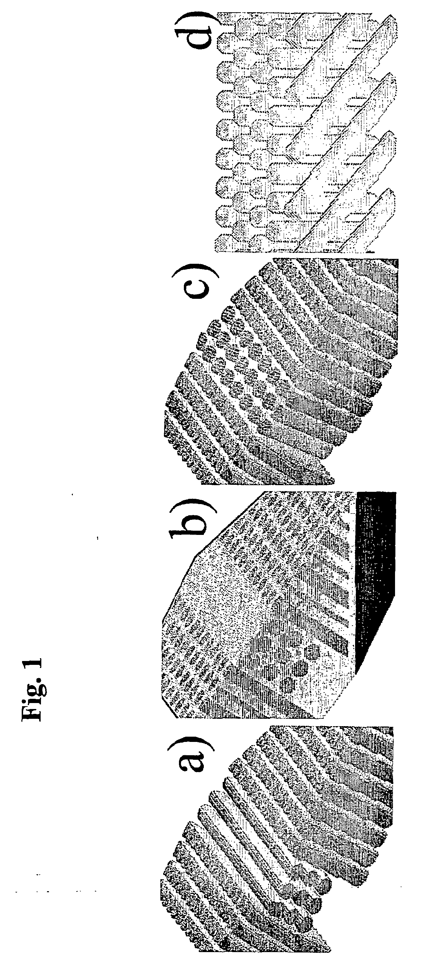

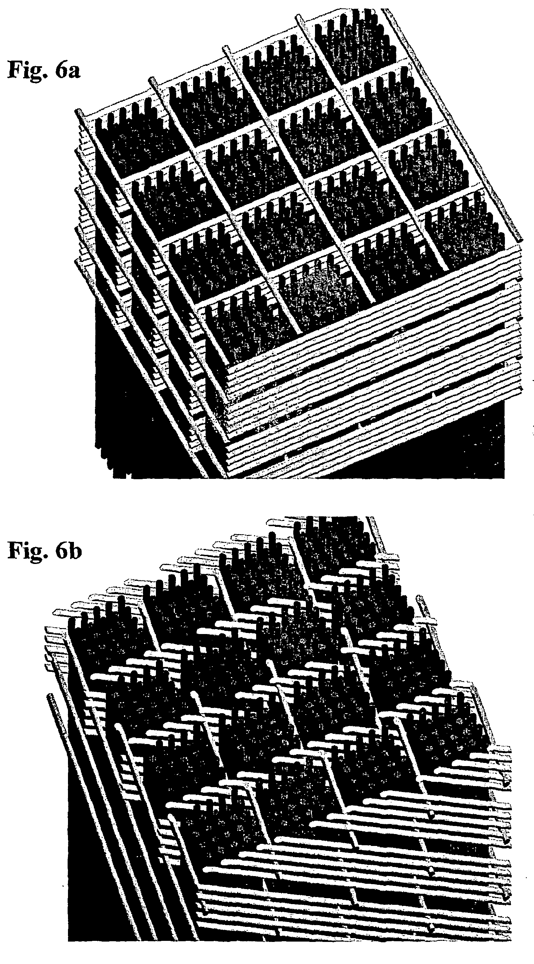

Der spezifische Erosionsmechanismus LOEM, beschrieben in den Beiträgen [2, 3], betrifft den CFC-NB31. LOEM verursacht eine starke, nichtlineare Erhöhung der Erosionsrate bei hohen Temperaturen im Bereich von 3 000 bis 4 000 K wegen der örtlichen Übererwärmung der CFC-Matrix und der Fasern, dem Stützgewebe, nahe der Näh-PAN-Fasern parallel zur erwärmten Oberfläche. Die Übererwärmung erfolgt wegen der speziellen Anordnung der Carbon-Faser-Struktur, speziell nur für NB31. Die NB31-Struktur ist optimal für die Wärmeleitfähigkeit, welche von den Pech- Kohle- bzw. Carbonfasern herrührt, die nach wie vor senkrecht zur der erwärmten Oberfläche der Armierung stehen. Der Anteil an Pechfasern mit hoher Wärmeleitfähigkeit bis zu 1 000 W/mK entlang der Faserachse beträgt ungefähr 30% des volumetrischen Teils von NB31. Außer der hohen Wärmeleitfähigkeit muss die Divertor-Armierung eine hinreichende Steifigkeit haben. Die gesamte Steifigkeit der Armierung, hervorgerufen durch das Stützgewebe, und zwar durch Weben, 4 % des volumetrischen Teils und durch Nähen, 4%, der Pechfasern durch PAN-Fasern, verstärkt die NB31-Armierung in zwei Richtungen, und zwar senkrecht zu den Pechfasern. Diese bekannte, herkömmliche Struktur zeigen Fig. 1a und Fig. 6. Die Web- und Nähfasern verlaufen parallel zur von dem Teilchenfluss getroffenen Oberfläche der Armierung. Figur 1b zeigt Figur 1a geschnitten mit der Carbon-Matrix in Frontansicht, um die Fasern hervorzuheben. Die Fasern selber sind Bündel aus Einzelfäden, lose oder verseilt oder geflochten, wobei ein solcher Einzelfaden einen Durchmesser im Bereich von 20 - 100 $\mu$m hat. Abhängig von den Festigkeits-, Web- und Nähanforderungen werden dann zur Herstellung des Faserverbundes, des Stützgewebes, aus den 3. Fasern: Pech-, Web- und Nähfasern, jeweils Bündel aus mehreren bis sehr vielen solcher mikrodünnen Einzelfäden hergestellt.

Daneben gestellt ist mit Figur 1c und Fig. 1d nun die Verbesserung der Faserstruktur:

dieselben Pechfasern senkrecht zur angeströmten Oberfläche, die Web- und Nähfasern geneigt unter 45° zu derselben. Figur 1c zeigt die Situation der Näh- und Pechfasern noch mal in Großansicht. Die von Teilchen angeströmte, den Wärmefluss auslösende Oberfläche ist oben.

LOEM in NB31 wirkt entsprechend dem deutlichen Unterschied des Wärmeausdehnungskoeffizienten der Carbonfasern und der Carbonmatrix, die den Zwischenraum zwischen den Fasern füllt. Diese großen Unterschiede sind eigentümlich für beide, Pech- und PAN-Fasern. Der Unterschied des Wärmeausdehnungskoeffizienten führt zu Wärmebeanspruchung während des Erwärmens der NB31-Armierung. Die Wärmebeanspruchung ist auf die Schnittstelle zwischen den Fasern und der Matrix konzentriert. Während ELM erhöht sich die Temperatur auf 3 000 - 4 000 K, und die Konzentration der Wärmebeanspruchung verursacht bevorzugt ein Brechen der Faser-Matrix-Schnittstelle für alle Fasern, unabhängig von ihrer Orientierung. Diese tatsächliche Wärmeleitungsreduktion hat unterschiedliche Folgen für die wärmeleitenden Pechfasern und für die Web- und Nähfasern. Die Pechfasern sind rechtwinkelig zu der erwärmten Armierungsoberfläche, und die Wärme breitet sich entlang den Fasern aus. Brüche an der Seitenwand der Fasern schützen nicht vor der Fortpflanzung/Verbreitung des Wärmeflusses, deshalb hängt der Wärmetransport der Armierungsbereiche, die Pechfaser gefüllt sind, nicht von den Brüchen an den Schnitt-/Berührstellen mit der CFC-Matrix ab. Die Situation ist völlig anders für die Web- und Nähfasern parallel zur Oberfläche. In solchen Regionen breitet sich die Wärme durch die Fasern aus, so dass die Brüche an den Schnitt-/Berührstellen dieser Fasern drastisch die wirksame Wärmeleitfähigkeit in Richtung des Wärmeflusses reduziert. Reduzierte wirksame Wärmeleitfähigkeit verursacht eine Erhöhung der Oberflächentemperatur der CFC-Matrix über die Nähfasern mit gebrochenen/geborstenen Seiten-/Mantelwänden.

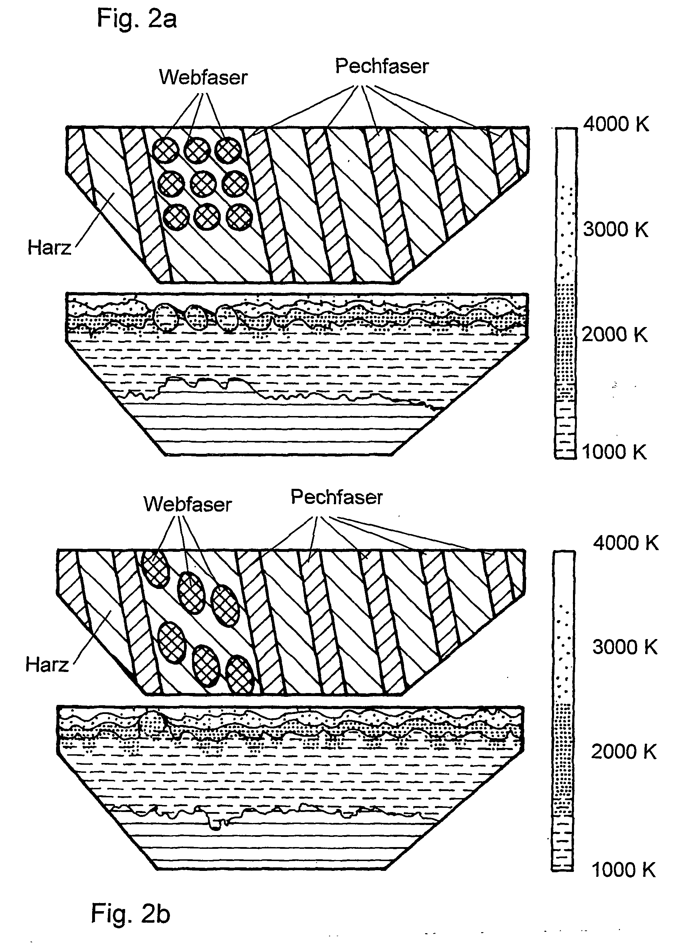

Fig. 2 zeigt die numerische Simulation von zwei CFC-Beispielen, die von der Deckfläche her erwärmt werden:

Fig 2a von NB31 und Fig. 2b von dem verbesserten CFC.

Gezeigt werden die Beispiele im Schnitt durch die Nähfasern und entlang der Pechfasern, die in vertikale Richtung verlaufen. Die jeweils oberen Bilder von Figur 2a und 2b zeigen die CFC-Struktur mit den Fasern, die unteren Bilder zeigen die zu den oberen Bildern gehörende Struktur bei einer Oberflächentemperatur von 3 500 - 4 000 K. Die Temperatur bei den unteren Strukturen stellt sich durch den Grad der Schwärzung dar, die Temperaturskala ist mittig im Bild senkrecht eingetragen, die weiße Farbe ist 4 000 K zugeordnet und die schwarze 1 000 K. Die Matrix unter den Nähfasern ist überhitzt in NB31, Fig. 2a, verglichen mit dem verbesserten CFC in Fig. 2b. Gezeigt werden die Querschnitte des dargestellten Musters, die von der Oberfläche her mit einem konstanten Wärmefluss von 5 GW/m$^2$ belastet werden. Der angegebene Wärmefluss ist charakteristisch für den Typ I ELM bei ITER. Der jeweils obere Teil zeigt die Faserstruktur von NB31 mit den wärmeleitenden Pechfasern, die vertikal von der erwärmten oberen Oberfläche abwärts verlaufen, und die parallel zur Oberfläche angeordneten Nähfasern, als Kreise zu sehen. Die Zwischenräume zwischen den Fasern sind mit Carbon-Matrix-Material angefüllt. Bei solchen Temperaturen sind die Mantel-/Oberflächen nahe der Oberfläche der ersten drei Fasern schon gebrochen/geborsten/geplatzt, so dass die effektive Wärmeleitfähigkeit durch die Brüche reduziert ist und die Temperatur der Matrix über den Fasern höher als die Oberflächentemperatur der Pechfasern und umgebende Matrix ist.

Das Brechen von Graphitmaterial wird durch die Wärmebelastung bestimmt, die während der Erwärmung von außen entsteht. Das Brechen der Graphitarmierung hat zwei physikalische Gründe. Der erste ist die Anisotropie von benachbarten Graphitkörnchen oder Fasern, so dass das Brechen proportional zur Graphittemperatur selber ist. Der zweite Beitrag tritt entsprechend dem Temperaturgradienten in/innerhalb der Armierung/dem Hitzeschild auf. Schätzungen, beschrieben in [5], haben gezeigt, dass für Erwärmungsbedingungen, die charakteristisch für die ELMn, Plasmabrüche und andere nicht normale Ereignisse in ITER sind, die anisotropen Beiträge für das Brechen immer höher sind als die Beiträge durch Temperaturgradienten. Unter der Berücksichtigung dieses Ergebnisses ist darauf zu schließen, dass die überhitzten Bereiche von NB31-CFC, benachbart zu den Web- und Nähfasern, entsprechend den Temperaturunterschieden brechen und stärker erodieren als die CFC-Bereiche mit Pechfasern.

Folgende Zustände des NB31 Erosionsprozesses, simuliert durch Anwendung des PEGASUS-3D-Codes, werden in Fig. 3. gezeigt. Sie zeigt die Entwicklung des Erosionsprozesses der NB31- Armierungs-/Schildoberfläche unter wiederholter Oberflächenerwärmung mit einem Wärmefluss von 5 GW/m², ELMs simulierend. Die aus-/durchgeführte Simulation benutzt den PEGASUS-3D-Code. Die Frontansicht des Musters/der Probe ist zur Demonstration der Erosionsvertiefung aufgeschnitten. Die Erosion ist hauptsächlich auf der Seite der Nähfasern und verläuft parallel zur erwärmten Oberfläche. Zunächst erodiert das Matrixmaterial über den Nähfasern, siehe Fig. 3a, entsprechend seiner Überhitzung, wie es in Fig. 2a gezeigt wurde. Nach der Erosion des Matrixmaterials, werden die ersten freigelegten/enthüllten Nähfasern aus den gleichen Gründen überhitzt. Das CFC-Matrixmaterial hat mikrokristalline Strukturen und erodiert durch kleine Staubpartikel. Carbonfasern sind widerstandsfähiger gegen Wärmebelastung und erodieren mit langen Bruchstücken. Das Abstreifen und Entfernen von Fasern ist in den Fig. 3b und 3c dargestellt. Nach dem Entfernen der Schicht aus Fasern geht der Prozess in der gleichen Art mit den nächsten Schichten des Matrixmaterials und den Fasern weiter, Fig. 3d.

Aus dem beschriebenen Erosionsmechanismus folgt unmittelbar, dass die Anordnung von Web- und Nähfasern bei der/dem NB31-Armierung/Schild die am schlechtesten mögliche ist, weil sie parallel zur erwärmten Oberfläche verlaufen und der Wärmefluss sie transversal durchquert. Die transversal zu den Fasern gerichtete Leitfähigkeit ist extrem niedrig - wenigstens 50mal niedriger als in axialer Richtung. Mehr noch, aufgrund des bevorzugten Brechens der Fasern auf der Mantelfläche nimmt die Leitfähigkeit quer durch die Web- und Nähfasern noch mehr ab.

Die Neigung der Web- und Nähfasern zu den Bündelfasern (ex-PANdirection) zur der erwärmten Oberfläche verbessert die Wärmeleitfähigkeit, da der Wärmefluss auch in die axiale Richtung der Fasern zeigt. Die Neigung beider, der Näh- und Webfasern mit 45°, zur erwärmten Oberfläche unter Beibehaltung der Anordnung der Pechfasern ist die beste Lösung vom Standpunkt der Konservierung der maximalen Wärmeleitfähigkeit und der mechanischen Festigkeit aus. In diesem Fall sind die Näh- und Webfasern senkrecht zueinander und können denselben Volumenanteil wie in NB31 haben, so dass sie eine Armierungs-/Schildsteifigkeit vergleichbar bei NB31 haben. Mehr noch, mit der Neigung der Näh- und Webfasern bei 45° zur erwärmten Oberfläche wird Wärme entlang den Fasern geführt und der Wärmefluss ist fast unabhängig von den Brüchen an der Faser-Matrix-Schnittstelle. Winkel von 45° verschieden für Näh- und Webfasern, werden in Betracht gezogen, wenn zusätzliche Anforderungen wegen des vorgesehenen Einsatzes in Betracht zu ziehen sind oder einer der beiden genannten aufgrund technischer Anforderungen stärker dominieren muss.

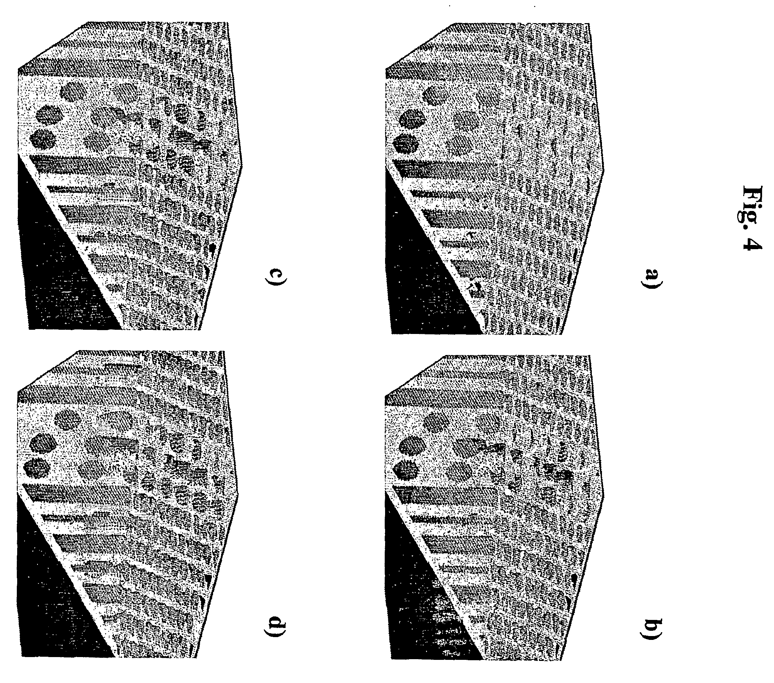

Figuren 1c und 1d erläutern den verbesserten CFC. Die wärmeleitende Struktur der Pechfasern ist unverändert und dieselbe wie beim NB31. Die numerische Simulation der Erosion für den CFC mit verbesserter Faserstruktur wurde unter Nutzung des PEGASUS-3D-Code durchgeführt. Zur Abschätzung der Reduktion der Erosionsrate hat der CFC mit verbesserter Faserstruktur dieselben wärmephysikalischen und mechanischen Parameter für die Fasern und die Matrix, wie sie für den NB31-CFC benutzt wird. Erosionsmuster für den verbesserten CFC werden in Figuren 4a bis 4d nach derselben Anzahl von ELMn, wie für NB31-CFC in Figuren 3a bis 3d, gezeigt.

Fig. 4 stellt die Entwicklung der verbesserten CFC-Armierungsoberfläche dar, die den Erosionsprozess unter repetitiver Oberflächenerwärmung mit denselben Bedingungen wie bei NB31 zeigt. Gezeigt werden Probenansichten nach derselben Anzahl von ELMs wie in Figur 3 für NB31. Die Erosion der verbesserten CFC ist viel kleiner und es gibt keinen ausgeprägten Unterschied in der Erosion an Stellen von Web- und Nähfasern, geneigt zu der erwärmten Oberfläche und nahe den Pechfasern. Der Vergleich der Simulationsergebnisse offenbart, dass im Gegensatz zum NB31 der verbesserte CFC keine Erosionsverstär-, kung entsprechend zu LOEM zeigt. Wie erwartet, führt die verbesserte Struktur von Näh- und Webfasern nicht zur Überhitzung des Matrixmaterials und der Fasern. Trotz desselben Brechens der Schnittstellen zwischen Matrix und Fasern, wie es bei NB31 ist, nimmt die mittlere Wärmeleitfähigkeit in Regionen von Web- und Nähfasern nicht dramatisch ab, weil der Hauptwärmefluss entlang der Fasern verläuft, die unter einem Winkel von 45° zur erwärmten Oberfläche geneigt sind. Die Faserstruktur und das Temperaturfeld innerhalb der verbesserten NB31-Muster sind in Figur 2b dargestellt. CFC mit der verbesserten Struktur zeigt nicht die Temperaturerhöhung über der gebrochenen Näh-Faser, welche für NB31 eigentümlich ist und die LOEM-Existenz bestimmt. Die numerische Simulation der Erosion für NB31-CFC und für den CFC mit den vorgeschlagenen Verbesserungen der Faserstruktur erfolgt unter wiederholter ELM-Last.

Die Fig. 6 zeigen die CFC-Struktur ohne Carbonmatrix, so dass der jeweilige Faserverlauf deutlich gezeigt wird, und zwar Fig. 6a die herkömmliche des NB31-Typs und Fig. 6b die des verbesserten CFC mit unveränderter Lage der Pechfasern, bei dem die Näh- und Webfasern senkrecht zueinander und unter 45° zur angeströmten Oberfläche stehenden.

Den Vergleich der Erosionsraten zweier CFC, NB31 und CFC mit verbesserter Struktur unter wiederholter Oberflächenerwärmung durch einen Wärmefluss von 5 GW/m2, indem ELMs simuliert werden, zeigt Fig. 5. Die Erosion ist definiert als das überall erodierte Volumen des numerischen Musters geteilt durch die erwärmte Oberfläche. Entsprechend den numerischen Ergebnissen besteht eine entscheidende Reduktion der Erosionsrate durch die CFC-Strukturverbesserung.

Die Haupteigenschaft von LOEM - bevorzugte Erosion der Stellen mit Web- und Nähfasern - parallel zur erwärmten Oberfläche wurde gezeigt/bewiesen.

Die Beschreibung des Erosionsmechanismus, LOEM, des NB31-Schilds/der NB31-Armierung offenbart eine besonders hohe Erosionsrate für die CFC-Klasse. Experimente bestätigen eine verstärkte Erosion von NB31 unter repetitiven Belastungen, charakteristisch für Typ I ELMs bei ITER.

Abkürzungen

CFC = carbon fibre composites
LOEM = local overheating erosion mechanism
PAN = polyacrylnitrile
ELM = edge localized mode
VDE = vertical deflection event

Quellangaben

[1] G. Federici et al; Key ITER plasma edge and plasma-material interaction issues. Journal of Nuclear Materials Volumes 313-316, March 2003, 11-22

[2] S. Pestchanyi, V. Safronov I. Landman, Estimation of carbon fibre composites as ITER divertor armour, Journal of Nuclear Materials, Vol. 329-333 (2003) 697-701

[3] S. Pestchanyi et al, 3-D simulation of macroscopic erosion of CFC under ITER off-normal heat loads, Fusion Engineering and Design. V. 66-68 (2003) 271-276.

[4] S. Pestchanyi, H. Wuerz, Brittle destruction of carbon based materials under off-normal ITER-FEAT conditions, Phys. Scr. T91 (2001) 84- 89.

[5] S. E. Pestchanyi_ and I. S. Landman, Effective Thermal Conductivity of Graphite Materials with Cracks, Physica Scripta. Vol. T111, 218-220, 2004

**Patentansprüche**

1. Verbesserter plattenförmiger Carbonfaser-Verbundwerkstoff, CFC, der einem Teilchenstrom ausgesetzt wird, welcher auf der getroffenen Oberfläche einen Wärmefluss in ihm hervorruft und dahinter liegende Einrichtungen vor zerstörerischer Hitzeeinwirkung schützt,
als Hitzeschild für Körper, die mit hoher Geschwindigkeit in eine Atmosphäre eintauchen oder sich darin bewegen,

oder
als Armierung für Divertoren im Torus einer Fusionsanlage vom Tokamak- oder Stellarator-Typ,
wobei der Verbundwerkstoff aus einer Faseranordnung/aus einem Stützgewebe aus Pech-, Web- und Nähfasern besteht, die in eine Carbonmatrix eingebettet sind,
und
die Pech-/Carbonfasern in dem Verbundwerkstoff so verlaufen, dass sie senkrecht zur der angeströmten Oberfläche stehen, die durch den Wärmefluss aus Gas- oder Plasmateilchen aus dem thermonuklearen Plasma erwärmt wird,
**dadurch gekennzeichnet, dass**
die Web- und Nähfasern nicht parallel zu dieser erwärmten Oberfläche verlaufen sondern unter einem Winkel im Bereich von

$$0° < \alpha < 90°,$$

vorzugsweise im Bereich

$$30° < \alpha < 60°.$$

**Claims**

1. Improved lamellar carbon fibre composite material, CFC, which is subjected to a particle stream which, on the pertinent surface, causes a thermal flow therein and protects any equipment, situated therebehind, from the destructive effect of heat,
in the form of a heat shield for bodies, which plunge at great speed into an atmosphere or move therein,
or
in the form of a reinforcement for diverters in the torus of a fusion system of the Tokamak or stellerator type,
the composite material being formed from a fibrous arrangement/from a protective fabric of pitch, woven and sewn fibres, which are embedded in a carbon matrix,
and
the pitch/carbon fibres extending in the composite material in such a manner that they lie at right angles to the flow-directed surface, which is heated by the thermal flow of gas or plasma particles from the thermonuclear plasma,
**characterised in that**
the woven and sewn fibres do not extend parallel to this heated surface but extend at an angle in the range of

$$0^o < \alpha < 90^o,$$

preferably in the range

$$30^o < \alpha < 60^o.$$

**Revendications**

1. Matériau composite amélioré à base de fibres de carbone et en forme de plaque, CFC, qui, exposé à un courant de particules qui crée un flux de chaleur sur la surface frappée, protège les installations situées en dessous, de l'action perturbatrice de la chaleur,
en tant qu'écran thermique pour des corps qui pénètrent à grande vitesse dans une atmosphère ou qui s'y déplacent, ou
en tant qu'armature pour des déflecteurs dans le tore d'une installation de fusion de type Tokamak ou Stellarotor,
le matériau composite étant constitué d'un ensemble de fibres à base d'un tissu support en fibres de bitume, fibres tissées et fibres cousues qui sont noyées dans une matrice de carbone, et
les fibres de bitume carbone s'étendant dans le matériau composite de façon à être dirigées perpendiculairement à la surface frappée qui est réchauffée par le flux de chaleur de particules de gaz ou de plasma provenant du plasma thermonucléaire, **caractérisé en ce que**
les fibres tissées et cousues ne s'étendent pas parallèlement à la surface réchauffée mais sous un angle dans une plage de :

$$0° < \alpha < 90°,$$

de préférence dans une plage de :

$$30° < \alpha < 60°.$$

Fig. 1

## Fig. 2a

Webfaser

Pechfaser

Harz

4000 K

3000 K

2000 K

1000 K

Webfaser

Pechfaser

Harz

4000 K

3000 K

2000 K

1000 K

## Fig. 2b

## Fig. 3

# Fig. 4

a)

b)

c)

d)

# Fig. 5

**Fig. 6a**

**Fig. 6b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **G. FEDERICI et al.** Key ITER plasma edge and plasma-material interaction issues. *Journal of Nuclear Materials,* Marz 2003, vol. 313-316, 11-22
- **S. PESTCHANYI ; V. SAFRONOV ; I. LANDMAN.** Estimation of carbon fibre composites as ITER divertor armour. *Journal of Nuclear Materials,* 2003, vol. 329 (333), 697-701
- **S. PESTCHANYI et al.** 3-D simulation of macroscopic erosion of CFC under ITER off-normal heat loads. *Fusion Engineering and Design.,* 2003, vol. 66-68, 271-276
- **S. PESTCHANYI ; H. WUERZ.** Brittle destruction of carbon based materials under off-normal ITER-FEAT conditions. *Phys. Scr.,* 2001, vol. T91, 84-89
- **S. E. PESTCHANYI ; I. S. LANDMAN.** Effective Thermal Conductivity of Graphite Materials with Cracks. *Physica Scripta.,* 2004, vol. T111, 218-220